# FASCICULE DE BREVET EUROPEEN

(11) **EP 4 514 598 B1**
(45) Date de publication et mention de la délivrance du brevet: **08.04.2026**
(21) Numéro de dépôt: 23725288.7
(22) Date de dépôt: 20.04.2023
(51) Int. Cl.: B29D 99/00, B29C 70/86, B29C 70/48, B29C 70/24, D03D 25/00, C04B 35/80, C04B 37/00, B29B 11/16, B64C 11/26, B64F 5/10, D03D 15/242, D03D 15/275, B29L 31/08

(54) **AUBE OU PALE D'HÉLICE AVEC PIED COMPOSITE ENROULÉ**
PROPELLERBLATT ODER -SCHAUFEL MIT GEWICKELTEM VERBUNDFUSS
PROPELLER BLADE OR AIRFOIL WITH WOUND COMPOSITE ROOT

(30) Priorité: 26.04.2022 FR 2203867
(43) Date de publication de la demande: 05.03.2025
(73) Titulaire: SAFRAN, 75015 Paris (FR); SAFRAN AIRCRAFT ENGINES, 75015 Paris (FR)
(72) Inventeur: FAIVRE D'ARCIER, Pierre, Jean, 77550 MOISSY-CRAMAYEL (FR); POSTEC, Clément, Pierre, 77550 MOISSY-CRAMAYEL (FR); CHARLEUX, François, 77550 MOISSY-CRAMAYEL (FR); MINERVINO, Mattéo, 77550 MOISSY-CRAMAYEL (FR)
(74) Mandataire: Cabinet Beau de Loménie
(86) Numéro de dépôt international: PCT/FR2023/050566
(87) Numéro de publication internationale: WO 2023/209312

(56) Documents cités:
- FR-A1- 3 106 364

## Description

### Domaine Technique

La présente invention se rapporte au domaine des aubes ou pales d'hélice pour aéronefs telles que celles présentes sur les turbopropulseurs.

### Technique antérieure

Les aubes ou pales d'hélice pour turbopropulseurs sont généralement réalisées en matériau métallique. Si les aubes ou pales d'hélice en matériau métallique ont une bonne résistance mécanique, elles présentent toutefois l'inconvénient d'avoir une masse relativement importante.

Afin d'obtenir des aubes ou pales d'hélice plus légères, il est connu de réaliser des pales d'hélice en matériau composite, c'est-à-dire en réalisant des pièces de structure à renfort fibreux densifié par une matrice.

Le document FR3106364A1 décrit une aube comprenant une structure en matériau composite, une pièce d'attache de pied d'aube comprenant en outre un épaulement, s'étendant dans la cavité depuis la paroi, une embase disposée dans la cavité et comprenant un support configuré pour venir en butée contre l'épaulement de la pièce d'attache de pied d'aube et un passage formé dans le support, les portions de la partie de pied d'aube de la structure en matériau composite s'étendant à travers le passage, et une pièce de blocage disposée dans la cavité entre les deux portions de la partie de pied d'aube, de sorte que chaque portion de la partie de pied d'aube se trouve plaquée par la pièce de blocage contre le support.

Le document US 2013/0017093 décrit la réalisation d'une pale d'hélice à partir d'une structure fibreuse à profil aérodynamique à l'intérieur de laquelle est introduite une partie d'un longeron, une extrémité du longeron étant prolongée par une portion renflée destinée à former le pied de la pale d'hélice.

La nouvelle génération de moteurs nécessite des pieds d'aube ou de pale plus compacts. Ce besoin vient de la nécessité de pouvoir faire pivoter l'aube ou la pale autour de son axe vertical afin d'adapter son incidence au régime de vol (aube ou pale à pas variable). Ce besoin, combiné au fait que l'aube ou la pale doit être intégrée le plus bas possible sur le disque, impose de réduire fortement l'encombrement du pied.

A cet effet, les pieds des aubes ou pales de nouvelle génération présentent une forme axisymétrique ou sensiblement axisymétrique ainsi que des dimensions réduites contrairement aux pieds de l'art antérieur comme ceux décrits dans le document US 2013/0017093 qui s'étendent sur toute la largeur de la partie inférieure l'aube ou pale.

Cette forme axisymétrique ou quasi-axisymétrique est plus difficile à fabriquer en matériau composite, en particulier lorsque le tissage tridimensionnel (3D) est utilisé pour former le renfort fibreux de l'aube ou de la pale.

Par ailleurs, les chargements mécaniques auxquels sont soumis les pieds de nouvelle génération imposent des contraintes supplémentaires. En effet, en outre des chargements mécaniques en traction et en flexion habituellement rencontrés (causés respectivement par les efforts centrifuges et les impacts avec des objets), les pieds de nouvelle génération peuvent être intégrés dans le disque du rotor à l'aide de coquilles métalliques, ce qui entraîne un chargement mécanique supplémentaire en compression circonférentielle.

### Exposé de l'invention

Il est donc souhaitable de pouvoir proposer une solution pour la réalisation d'aubes ou pales d'hélice d'aéronef en matériau composite avec un pied compact et apte à résister aux différents chargements mécaniques.

A cet effet, la présente invention propose un procédé de fabrication d'une aube ou pale d'hélice de turbopropulseur en matériau composite comprenant un renfort fibreux densifié par une matrice, le procédé comprenant :
- la réalisation par tissage tridimensionnel d'une ébauche fibreuse en une seule pièce, l'ébauche fibreuse présentant une forme plate s'étendant suivant une direction longitudinale et une direction transversale correspondant respectivement à la direction d'envergure et à la direction de corde de l'aube ou la pale d'hélice à fabriquer, l'ébauche fibreuse comprenant une partie de pied et une partie de profil aérodynamique s'étendant suivant la direction longitudinale à partir de la partie de pied et suivant la direction transversale entre une portion de bord d'attaque et une portion de bord de fuite,
- la mise en forme de l'ébauche fibreuse pour obtenir une préforme fibreuse en une seule pièce ayant ladite partie de profil aérodynamique formant préforme de profil aérodynamique et ladite partie de pied formant préforme de pied, et
- la densification de la préforme par une matrice pour obtenir une aube ou une pale d'hélice en matériau composite ayant un renfort fibreux constitué par la préforme fibreuse et densifié par la matrice, et formant une seule pièce avec pied intégré, caractérisé en ce que la partie de pied de l'ébauche fibreuse comprend une déliaison s'étendant suivant un plan parallèle à la surface de l'ébauche fibreuse sur l'ensemble de la partie de pied, ladite déliaison séparant la partie de pied en deux portions tissées et en ce que la mise en forme de l'ébauche fibreuse comprend l'enroulement de chaque portion tissée autour d'un élément d'insertion de manière à former une partie de préforme de pied.

Le procédé de l'invention permet ainsi de réaliser une pale d'hélice ou une aube avec un pied composite qui est à la fois compact et parfaitement adapté pour résister aux différents chargements mécaniques décrits précédemment. En effet, la partie de renfort fibreux du pied est réalisée en tissage 3D et présente une forme enroulée qui est reliée à la partie de renfort fibreux du profil aérodynamique en son centre. On obtient ainsi un pied composite bien plus compact que celui de l'art antérieur qui s'étend généralement sur toute la largeur de la partie inférieure du profil aérodynamique. Dans ce pied composite, il y a des fils, par exemple des fils de chaîne, orientés dans la direction d'envergure de la pale ou de l'aube qui confère à celle-ci une bonne résistance mécanique en traction et en flexion par combinaison avec le tissage 3D. En outre, dans le pied composite, il y a des fils, par exemple des fils de trame, orientés dans la direction de corde de la pale ou de l'aube qui confère à celle-ci une bonne résistance mécanique en compression circonférentielle.

Par ailleurs, l'enroulement des portions tissées autour d'un élément d'insertion permet d'obtenir un pied ayant une forme axisymétrique ou quasi-axisymétrique compatible avec une intégration dans un système de rotation ou changement de pas d'hélice.

En réalisant ainsi un renfort fibreux dans lequel une partie de pied est intégralement formée, c'est-à-dire tissée en une seule pièce, avec une partie de profil aérodynamique, on assure une très bonne tenue mécanique de l'ensemble de la pièce et, en particulier, au niveau de la liaison entre le pied et le profil aérodynamique.

Selon un aspect du procédé de l'invention, chaque portion tissée comprend une première partie s'étendant suivant la direction longitudinale à partir de la partie de profil aérodynamique et une deuxième partie s'étendant suivant la direction longitudinale à partir de la première partie, la deuxième partie présentant suivant la direction transversale une largeur supérieure à la largeur de la première partie. La deuxième partie de chaque portion tissée présente suivant la direction transversale une largeur équivalente à au moins la moitié de la circonférence de la partie de l'élément d'insertion autour de laquelle ladite deuxième partie de chaque portion tissée est enroulée.

Selon un autre aspect du procédé de l'invention, l'élément d'insertion est constitué d'un matériau fibreux choisi parmi un des matériaux fibreux suivants : tissés tridimensionnels, strates unidirectionnelles et mat de fibres ou est constitué d'un matériau métallique.

L'invention a également pour objet une aube ou pale d'hélice de turbopropulseur en matériau composite comprenant un renfort fibreux densifié par une matrice, l'aube ou la pale d'hélice comportant suivant une direction longitudinale un pied et un profil aérodynamique, le renfort fibreux comprenant une préforme fibreuse présentant un tissage tridimensionnel avec une partie de préforme de pied présente dans le pied et une partie de profil aérodynamique présente dans le profil aérodynamique, les parties de préforme de pied et de profil aérodynamique étant liées l'une à l'autre par le tissage tridimensionnel, caractérisée en ce que la partie de préforme de pied comprend deux peaux tissées enroulées autour d'un élément d'insertion.

Selon un aspect de l'aube ou pale d'hélice de l'invention, chaque peau comprend une première partie s'étendant suivant la direction longitudinale à partir de la partie de préforme de profil aérodynamique et une deuxième partie s'étendant suivant la direction longitudinale à partir de la première partie, la deuxième partie de chaque peau étant enroulée sur au moins la moitié de la circonférence de la partie de l'élément d'insertion autour de laquelle ladite deuxième partie de chaque portion tissée est enroulée.

Selon un autre aspect de l'aube ou pale d'hélice de l'invention, l'élément d'insertion est constitué d'un matériau fibreux choisi parmi un des matériaux fibreux suivants : tissés tridimensionnels, strates unidirectionnelles et mat de fibres ou est constitué d'un matériau métallique.

L'invention couvre en outre un moteur aéronautique comprenant une pluralité d'aubes ou de pales d'hélice selon l'invention ainsi qu'un aéronef comprenant au moins un tel moteur.

### Brève description des dessins

[Fig. 1] La figure 1 est une vue schématique illustrant le tissage 3D d'une ébauche fibreuse pour la fabrication d'une aube,
[Fig. 2] La figure 2 est une vue en coupe en sens trame à échelle agrandie d'un ensemble de couches de fils montrant la formation de deux déliaisons dans la partie de pied de l'ébauche de la figure 1 selon un plan de coupe II-II,
[Fig. 3] La figure 3 est une vue en perspective montrant la mise en forme d'une partie de préforme de pied dans l'ébauche fibreuse de la figure 1,
[Fig. 4] La figure 4 est une vue schématique en perspective éclatée montrant un outillage d'injection et le placement de la préforme fibreuse de la figure 3 à l'intérieur de celui-ci conformément à un mode de réalisation de l'invention,
[Fig. 5] La figure 5 est une vue schématique en perspective montrant l'outillage d'injection de la figure 4 fermé,
[Fig. 6] La figure 6 est une vue schématique en perspective d'une aube en matériau composite obtenue conformément à un mode de réalisation de l'invention.

### Description des modes de réalisation

L'invention s'applique d'une manière générale à différents types d'aubes ou pales d'hélice utilisées dans des moteurs d'aéronefs. L'invention trouve une application avantageuse mais non exclusive dans des aubes ou pales d'hélice de grandes dimensions qui sont destinées à être intégrées à des systèmes de pivotement ou pas variable. De telles aubes ou pales d'hélice sont en général munies d'un pied présentant à la fois un faible encombrement (forme compacte) et une bonne une résistance vis-à-vis d'efforts en traction, flexion et compression circonférentielle. L'aube selon l'invention peut notamment constituer une aube pour roues mobiles carénées telles que des aubes de soufflante ou une aube pour roues mobiles non carénées comme dans les moteurs aéronautiques dits « open rotor ».

Dans la suite de la description, les exemples de réalisation sont décrits en relation avec des aubes pour turbopropulseur. Toutefois, les exemples de réalisation s'appliquent également à des pales d'hélice pour aéronefs.

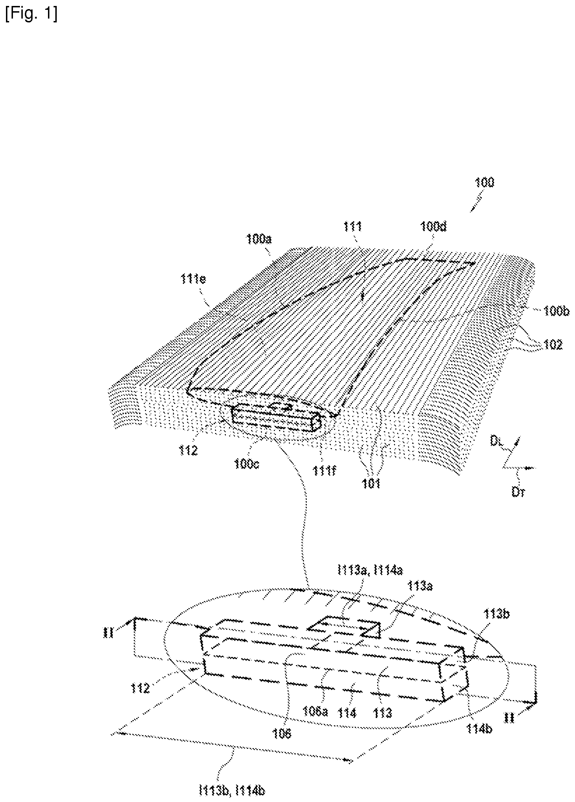

La figure 1 montre très schématiquement une ébauche fibreuse 100 destinée à former la préforme fibreuse d'une aube à réaliser.

L'ébauche de structure fibreuse 100 est obtenue, comme illustrée schématiquement sur la figure 1, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102. L'ébauche de structure fibreuse 100 est tissée en une seule pièce, l'ébauche s'étendant dans une direction longitudinale D_{L}, correspondant à la direction d'envergure de l'aube à fabriquer, entre une partie inférieure 100c et une partie supérieure 100d et dans une direction transversale D_{T}, correspondant à la direction de corde de l'aube à fabriquer entre un bord avant 100a et un bord arrière 100b, l'ébauche comprenant une partie de profil aérodynamique 111 définissant deux faces 111e et 111f destinées à former respectivement les faces extrados et intrados de l'aube et une partie de pied 112 destinée à former ultérieurement un pied d'aube et s'étendant à l'extérieur de l'ébauche de profil aérodynamique 111 suivant la direction longitudinale D_{L} et en retrait des bords avant et arrière 100a et 100b suivant la direction transversale D_{T}.

Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755. Ce document décrit notamment la réalisation par tissage en une seule pièce de structures fibreuses de renfort pour des pièces telles que des aubes ayant un premier type d'armure à cœur et un deuxième type d'armure en peau qui permettent de conférer à la fois les propriétés mécaniques et aérodynamiques attendues pour ce type de pièce.

L'ébauche fibreuse selon l'invention peut être tissée notamment à partir de fils de fibres de carbone ou de céramique tel que du carbure de silicium.

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document US 2006/257260.

Conformément à l'invention, lors du tissage, une déliaison 106 est réalisée à l'intérieur de la partie de pied 112 l'ébauche fibreuse 100 entre deux couches successives de fils de chaîne. La déliaison 106 s'étend suivant un plan parallèle à la surface de l'ébauche fibreuse et sur toute la surface de la partie de pied 112 de manière à séparer celle-ci en deux portions tissées 113 et 114.

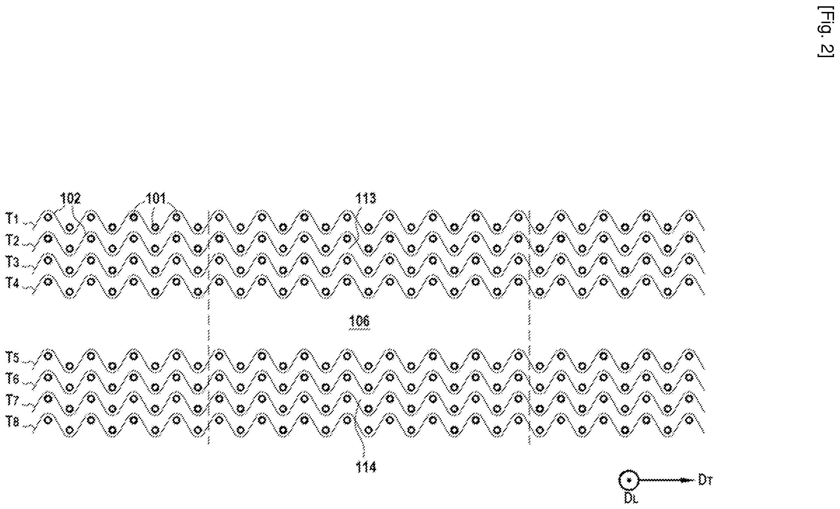

Un mode de tissage 3D à armure interlock de l'ébauche 100 est montré schématiquement par la figure 2. La figure 2 est une vue partielle agrandie d'un plan en coupe chaîne dans la partie de pied 112 de l'ébauche 100 comportant la déliaison 106 (coupe II-II sur la figure 1). Dans cet exemple, l'ébauche 100 comprend 8 couches de fils de chaîne 101 s'étendant sensiblement dans la direction longitudinale DL, la déliaison 106 séparant les 8 couches de fils de chaîne en deux groupes de 4 couches de fils de chaîne. Plus précisément, sur la figure 2, la portion tissée 113 comprend 4 couches de fils de chaîne 101 liées entre elles par 4 fils de trame T₁ à T₄ tandis que la portion tissée 114 comprend 4 couches de fils de chaîne liées entre elles par 4 fils de trame T₅ et T₈.

En d'autres termes, le fait que les fils de trame T₁ à T₄ ne s'étendent pas dans les couches de fils de chaîne de la portion tissée 114 et que les fils de trame T₅ à T₈ ne s'étendent pas dans les couches de fils de chaîne de la portion tissée 113 assure la déliaison 106 qui sépare les portions tissées 113 et 114.

Dans l'exemple décrit ici, la partie de pied 112 présente une forme en T inversé. Plus, précisément la portion tissée 113, respectivement 114, comprend une première partie 113a, respectivement 114a, s'étendant suivant la direction longitudinale D_{L} à partir de la partie de profil aérodynamique 111 et une deuxième partie 113b, respectivement 114b, s'étendant suivant la direction longitudinale à partir de la première partie 113a, respectivement 114a, la deuxième partie 113b, respectivement 114b, présentant suivant la direction transversale D_{T} une largeur I_{113b}, respectivement I_{114b}, supérieure à la largeur I₁₁₃ₐ, respectivement I₁₁₄ₐ, de la première partie 113a, respectivement 114a. La deuxième partie 113b, respectivement 114b, de la portion tissée 113, respectivement 114, présente suivant la direction transversale D_{T} une largeur I_{113b}, respectivement I_{114b}, équivalente à au moins la moitié de la circonférence de la partie de l'élément d'insertion autour de laquelle ladite deuxième partie est destinée à être enroulée.

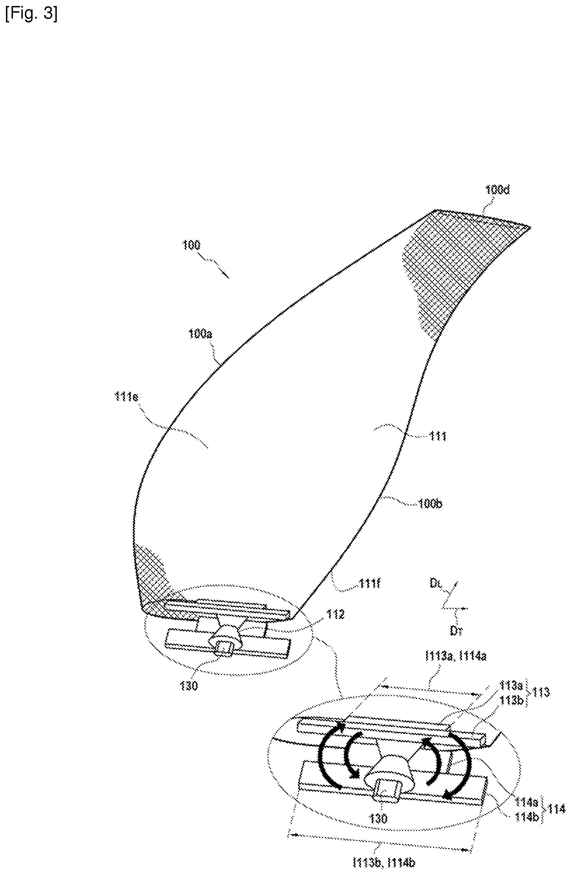

Une fois le tissage terminé, les fils non tissés présents autour de l'ébauche fibreuse 100 sont découpés pour extraire l'ébauche puis on procède à la mise en forme de la partie de pied l'ébauche. Dans l'exemple décrit ici, la mise en forme de la partie de pied 112 est réalisée par enroulement des portions tissées 113 et 114 autour d'un élément d'insertion 130 comme illustré sur la figure 3. L'élément d'insertion ou au moins la partie de l'élément d'insertion autour de laquelle les portions tissées sont destinées à être enroulées présente de préférence une forme axisymétrique ou sensiblement axisymétrique afin de former un pied compact et facilement intégrable dans un système de rotation ou changement de pas d'hélice.

Selon la largeur des deuxièmes parties 113b et 114b des portions tissées 113 et 114, chacune de ces portions tissées peuvent être enroulées sur la moitié de la circonférence de l'élément d'insertion, sur toute la circonférence de l'élément d'insertion ou sur plusieurs fois la circonférence de l'élément d'insertion. Dans l'exemple décrit ici, la deuxième partie 113b, respectivement 114b, de la portion tissée 113, respectivement 114, présente suivant la direction transversale D_{T} une largeur I_{113b}, respectivement I_{114b}, équivalente à la moitié de la circonférence de la partie de l'élément d'insertion autour de laquelle ladite deuxième partie est destinée à être enroulée.

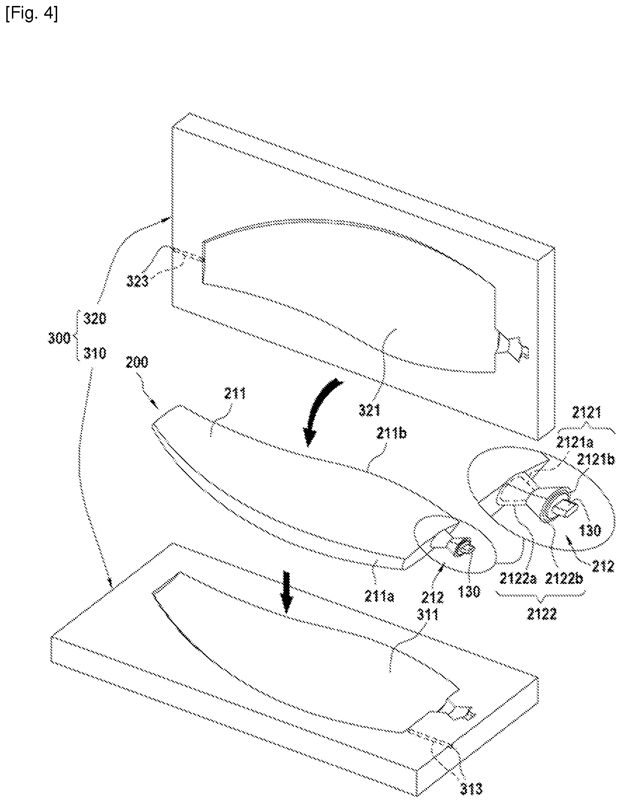

On obtient ainsi une préforme fibreuse 200 comprenant suivant la direction longitudinale D_{L} une partie de préforme de profil aérodynamique 211 et une partie de préforme de pied 212 présentant une forme de bulbe comme représentée sur la figure 4. La partie de préforme de pied 212 comprend deux peaux 2121 et 2122 enroulées autour de l'élément d'insertion 130 avec des premières parties de peaux 2121a et 2122a faisant un demi-tour autour de l'élément d'insertion et des deuxièmes parties de peaux 2121b et 2122b faisant un tour complet autour de l'élément d'insertion. La partie de préforme de profil aérodynamique 211 s'étendant suivant la direction transversale D_{T} entre une partie de bord d'attaque 211a et une partie de bord de fuite 211b.

On procède ensuite à la densification de la préforme fibreuse. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification est réalisée de façon connue en soi suivant le procédé par voie liquide (CVL). Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

Comme illustré sur la figure 4, l'injection d'une composition liquide précurseur de matrice dans la texture fibreuse ainsi que sa transformation en matrice sont ici réalisées dans un outillage d'injection 300 qui comprend une première coquille 310 comprenant en son centre une première empreinte 311 correspondant en partie à la forme et aux dimensions de l'aube à réaliser et une deuxième coquille 320 comprenant en son centre une deuxième empreinte 321 correspondant en partie à la forme et aux dimensions de l'aube à réaliser.

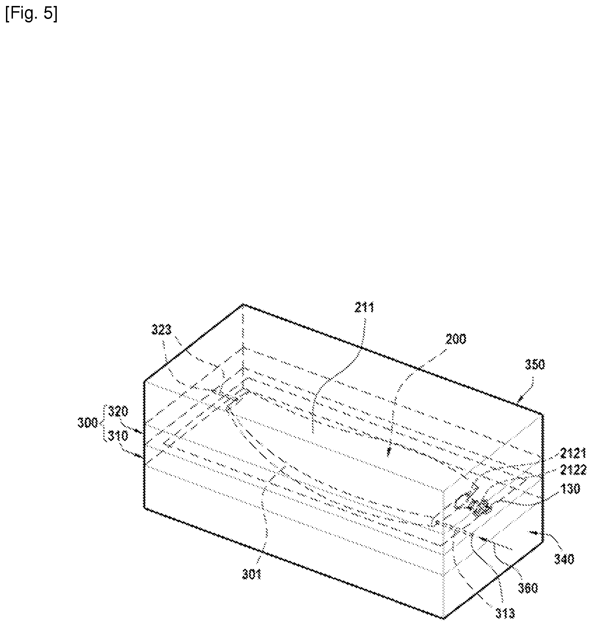

Une fois l'outillage 300 fermé comme illustré sur la figure 5, les première et deuxième empreintes 311 et 321 respectivement des première et deuxième coquilles 310 et 320 définissent ensemble un volume interne 301 ayant la forme de l'aube à réaliser et dans lequel est placée la préforme fibreuse 200. Un compactage de la préforme fibreuse 200 peut être réalisé avec la fermeture de l'outillage 300 afin d'obtenir un taux de fibres déterminé dans la préforme. Dans ce cas, une pression de compactage est appliquée sur les coquilles 310 et 320 par exemple au moyen d'une presse. Le compactage de la préforme fibreuse peut également être réalisé dans un outillage séparé avant l'introduction de la préforme dans l'outillage d'injection.

L'outillage 300 comprend en outre des moyens permettant de réaliser l'injection d'un précurseur liquide de matrice et la transformation de ce précurseur en matrice. Plus précisément, dans l'exemple décrit ici, la première coquille 310 de l'outillage 300 comprend un port d'injection 313 destiné à permettre l'injection d'une composition liquide précurseur de matrice dans la préforme fibreuse tandis que la deuxième coquille comprend un port d'évacuation 323 destiné à coopérer avec un système de pompage pour la mise sous vide de l'outillage et le tirage d'air lors de l'injection. L'outillage d'injection 300 comprend également une partie inférieure 340 et une partie supérieure 350 entre lesquels les première et deuxième coquilles 310 et 320 sont placées, la partie inférieure 340 et la partie supérieure 350 étant équipées de moyens de chauffage (non représentés sur la figure 5).

Une fois l'outillage 300 fermé, on procède au moulage de l'aube en imprégnant la préforme 200 avec une résine thermodurcissable que l'on polymérise par traitement thermique. On utilise à cet effet le procédé bien connu de moulage par injection ou transfert dit RTM ("Resin Transfert Moulding"). Conformément au procédé RTM, on injecte via le port d'injection 313 de la première coquille 310 une résine 360, par exemple une résine thermodurcissable, dans le volume interne occupé par la préforme 200. Le port 323 de la deuxième coquille 320 est relié à un conduit d'évacuation maintenu sous pression (non représentés sur la figure 5). Cette configuration permet l'établissement d'un gradient de pression entre la partie inférieure de la préforme 200 où la résine est injectée et la partie supérieure de la préforme située à proximité du port 323. De cette manière, la résine 360 injectée sensiblement au niveau de la partie inférieure de la préforme va imprégner progressivement l'ensemble de la préforme en circulant dans celle-ci jusqu'au port d'évacuation 323 par lequel le surplus est évacué. Bien entendu, les première et deuxième coquilles 310 et 320 de l'outillage 300 peuvent comprendre respectivement plusieurs ports d'injection et plusieurs ports d'évacuation.

La résine utilisée peut être, par exemple, une résine époxyde de classe de température 180 °C (température maximale supportéesans perte de caractéristiques). Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, l'aube est démoulée. Au final, l'aube est détourée pour enlever l'excès de résine et les chanfreins sont usinés. Aucun autre usinage n'est nécessaire puisque, la pièce étant moulée, elle respecte les cotes exigées.

Les procédés de densification décrits ci-avant permettent de réaliser, à partir de la préforme fibreuse de l'invention, principalement des aubes ou pales d'hélices en matériau composite à matrice organique (CMO), à matrice carbone (C/C) et à matrice céramique (CMC).

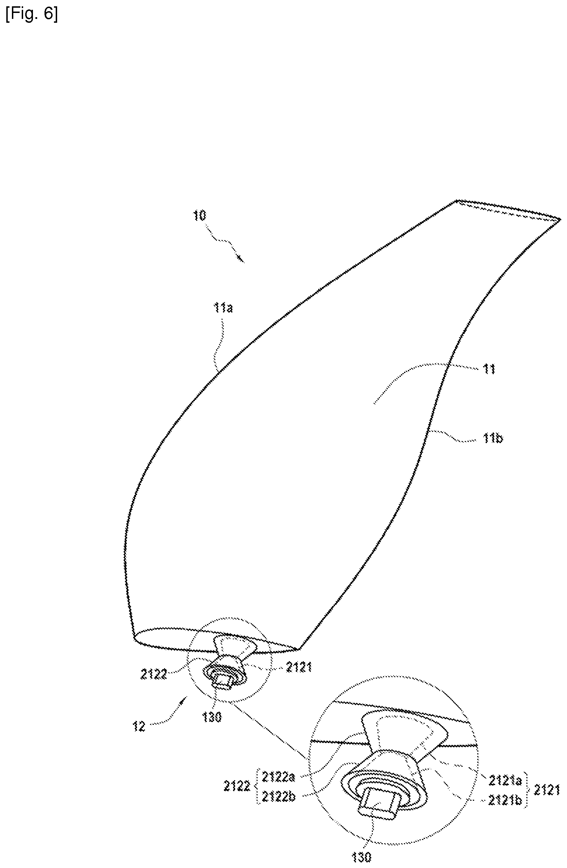

Comme illustrée sur la figure 6, on obtient une aube 10 formée d'un renfort fibreux densifié par une matrice qui comporte dans sa partie inférieure un pied 12 formé par la partie de préforme de pied 212 de la préforme fibreuse 200 et une pale 11 formée par la partie de préforme de pale 211 de la préforme fibreuse 200. L'aube 10 comporte un bord d'attaque 11a et un bord de fuite 11b correspondant respectivement aux parties de bord d'attaque 211a et de bord de fuite 211b de la préforme fibreuse 200. Le pied 12 présente une forme de bulbe, la partie de préforme de pied 212 comprenant deux peaux 2121 et 2122 enroulées autour de l'élément d'insertion 130 avec des premières parties de peaux 2121a et 2122a faisant un demi-tour autour de l'élément d'insertion et des deuxièmes parties de peaux 2121b et 2122b faisant un tour complet autour de l'élément d'insertion. L'aube 10 comprend ainsi un pied 12 qui présente une forme compacte axisymétrique adaptée pour une intégration dans un système de rotation ou changement de pas d'hélice.

## Revendications

1. Procédé de fabrication d'une aube ou pale d'hélice (10) de turbopropulseur en matériau composite comprenant un renfort fibreux densifié par une matrice, le procédé comprenant :
- la réalisation par tissage tridimensionnel d'une ébauche fibreuse (100) en une seule pièce, l'ébauche fibreuse présentant une forme plate s'étendant suivant une direction longitudinale (D_{L}) et une direction transversale (D_{T}) correspondant respectivement à la direction d'envergure et à la direction de corde de l'aube ou la pale d'hélice à fabriquer, l'ébauche fibreuse comprenant une partie de pied (112) et une partie de profil aérodynamique (111) s'étendant suivant la direction longitudinale (D_{L}) à partir de la partie de pied et suivant la direction transversale (D_{T}) entre une portion de bord d'attaque (100a) et une portion de bord de fuite (100b),
- la mise en forme de l'ébauche fibreuse (100) pour obtenir une préforme fibreuse (200) en une seule pièce ayant ladite partie de profil aérodynamique formant préforme de profil aérodynamique (211) et ladite partie de pied formant préforme de pied (212), et
- la densification de la préforme (200) par une matrice pour obtenir une aube ou une pale d'hélice (10) en matériau composite ayant un renfort fibreux constitué par la préforme fibreuse et densifié par la matrice, et formant une seule pièce avec pied intégré (12), de sorte que la partie de pied (112) de l'ébauche fibreuse (100) comprend une déliaison (106) s'étendant suivant un plan parallèle à la surface de l'ébauche fibreuse sur l'ensemble de la partie de pied, ladite déliaison séparant la partie de pied en deux portions tissées (113, 114), **caractérisé en ce que** la mise en forme de l'ébauche fibreuse comprend l'enroulement de chaque portion tissée autour d'un élément d'insertion (130) de manière à former une partie de préforme de pied (212).

2. Procédé selon la revendication 1, dans lequel chaque portion tissée (113, 114) comprend une première partie (113a, 114a) s'étendant suivant la direction longitudinale (D_{L}) à partir de la partie de profil aérodynamique (111) et une deuxième partie (113b, 114b) s'étendant suivant la direction longitudinale à partir de la première partie (113a, 113b), la deuxième partie (113b, 114b) présentant suivant la direction transversale (D_{T}) une largeur (I_{113b}, I_{114b}) supérieure à la largeur (I₁₁₃ₐ, I₁₁₄ₐ) de la première partie (113a, 114a).

3. Procédé selon a revendication 2, dans lequel la deuxième partie (113b, 114b) de chaque portion tissée (113, 114) présente suivant la direction transversale (D_{T}) une largeur (I_{113b}, I_{114b}) équivalente à au moins la moitié de la circonférence de la partie de l'élément d'insertion (130) autour de laquelle ladite deuxième partie de chaque portion tissée est enroulée.

4. Procédé selon l'une quelconque des revendications 1 à 3, dans lequel l'élément d'insertion (130) est constitué d'un matériau fibreux choisi parmi un des matériaux fibreux suivants : tissés tridimensionnels, strates unidirectionnelles et mat de fibres ou est constitué d'un matériau métallique.

5. Aube ou pale d'hélice (10) de turbopropulseur en matériau composite comprenant un renfort fibreux densifié par une matrice, l'aube ou la pale d'hélice comportant suivant une direction longitudinale (D_{L}) un pied (12) et un profil aérodynamique (11), le renfort fibreux comprenant une préforme fibreuse (200) présentant un tissage tridimensionnel avec une partie de préforme de pied (212) présente dans le pied (12) et une partie de profil aérodynamique (211) présente dans le profil aérodynamique (11), les parties de préforme de pied (212) et de profil aérodynamique (211) étant liées l'une à l'autre par le tissage tridimensionnel, de sorte que la partie de préforme de pied (212) comprend une déliaison séparant ladite partie de préforme de pied en deux peaux tissées (2121, 2122) enroulées autour d'un élément d'insertion (130).

6. Aube ou pale d'hélice selon la revendication 5, dans laquelle chaque peau (2121, 2122) comprend une première partie (2121a, 2122a) s'étendant suivant la direction longitudinale (D_{L}) à partir de la partie de préforme de profil aérodynamique (211) et une deuxième partie (2121b, 2122b) s'étendant suivant la direction longitudinale à partir de la première partie (2121a, 2122a), la deuxième partie de chaque peau étant enroulée sur au moins la moitié de la circonférence de la partie de l'élément d'insertion (130) autour de laquelle ladite deuxième partie de chaque portion tissée est enroulée.

7. Aube ou pale d'hélice selon la revendication 5 ou 6, dans laquelle l'élément d'insertion (130) est constitué d'un matériau fibreux choisi parmi un des matériaux fibreux suivants : tissés tridimensionnels, strates unidirectionnelles et mat de fibres ou est constitué d'un matériau métallique.

8. Moteur aéronautique comprenant une pluralité d'aubes ou de pales d'hélice (10) selon l'une quelconque des revendications 5 à 7.

9. Aéronef comprenant au moins un moteur selon la revendication 8.

## Patentansprüche

1. Verfahren zur Herstellung einer Schaufel oder eines Propellerblatts (10) eines Turboprops aus Verbundmaterial, das eine durch eine Matrix verdichtete Faserverstärkung umfasst, wobei das Verfahren umfasst:
- die Verwirklichung eines Faserrohlings (100) in einem Stück durch dreidimensionale Verwebung, wobei der Faserrohling eine flache Form aufweist, die sich einer Längsrichtung (D_{L}) und einer Querrichtung (D_{T}) folgend erstreckt, die jeweils der Spannweitenrichtung und der Sehnenrichtung der Schaufel oder des Propellerblatts, die/das hergestellt werden soll, entsprechen, wobei der Faserrohling einen Fußteil (112) und einen aerodynamischen Profilteil (111) umfasst, der sich der Längsrichtung folgend (D_{L}) von dem Fußteil weg und der Querrichtung (D_{T}) folgend zwischen einem Vorderkantenabschnitt (100a) und einem Hinterkantenabschnitt (100b) erstreckt,
- die Formung des Faserrohlings (100), um eine Faservorform (200) in einem Stück zu erhalten, welche den aerodynamischen Profilteil, der die Vorform des aerodynamischen Profils (211) bildet, und den Fußteil aufweist, der die Fußvorform (212) bildet, und
- die Verdichtung der Vorform (200) durch eine Matrix, um eine Schaufel oder ein Propellerblatt (10) aus Verbundmaterial zu erhalten, die/das eine Faserverstärkung aufweist, die von der Faservorform gebildet wird und durch eine Matrix verdichtet ist, und einen einzelnen Teil mit integriertem Fuß (12) bildet, auf eine Weise, dass der Fußteil (112) des Faserrohlings (100) eine Entbindung (106) umfasst, die sich einer Ebene parallel zu der Oberfläche des Faserrohlings auf der Anordnung des Fußteils folgend erstreckt, wobei die Entbindung den Fußteil in zwei gewebte Abschnitte (113, 114) teilt,
**dadurch gekennzeichnet, dass** die Formung des Faserrohlings das Aufwickeln eines jeden gewebten Abschnitts um ein Einsatzelement (130) herum auf eine Weise umfasst, um einen Fußvorformteil (212) zu bilden.

2. Verfahren nach Anspruch 1, wobei jeder gewebte Abschnitt (113, 114) einen ersten Teil (113a, 114a), der sich der Längsrichtung (D_{L}) folgend von dem aerodynamischen Profilteil (111) weg erstreckt, und einen zweiten Teil (113b, 114b) umfasst, der sich der Längsrichtung folgend von dem ersten Teil (113a, 113b) weg erstreckt, wobei der zweite Teil (113b, 114b) der Querrichtung (D_{T}) folgend eine Breite (I_{113b}, I_{114b}) aufweist, die größer ist als die Breite (I₁₁₃ₐ, I₁₁₄ₐ) des ersten Teils (113a, 114a).

3. Verfahren nach Anspruch 2, wobei der zweite Teil (113b, 114b) eines jeden gewebten Abschnitts (113, 114) der Querrichtung (D_{T}) folgend eine Breite (I_{113b}, I_{114b}) aufweist, die gleich zumindest der Hälfte des Umfangs des Teils des Einsatzelements (130) ist, um welchen der zweite Teil eines jeden gewebten Abschnitts aufgewickelt ist.

4. Verfahren nach einem der Ansprüche 1 bis 3, wobei das Einsatzelement (130) aus einem Fasermaterial besteht, das aus den folgenden Fasermaterialien ausgewählt ist: dreidimensionale Gewebe, unidirektionale Schichten und Fasermatten, oder aus einem metallischen Material besteht.

5. Schaufel oder Propellerblatt (10) eines Turboprops aus Verbundmaterial, umfassend eine Faserverstärkung, die durch eine Matrix verdichtet ist, wobei die Schaufel oder das Propellerblatt einer Spannweitenrichtung (D_{L}) folgend einen Fuß (12) und ein aerodynamisches Profil (11) beinhaltet, wobei die Faserverstärkung eine Faservorform (200) umfasst, die eine dreidimensionale Verwebung aufweist, mit einem Fußvorformteil (212), der in dem Fuß (12) vorliegt, und einem aerodynamischen Profilteil (211), der in dem aerodynamischen Profil (11) vorliegt, wobei der Fußvorformteil (212) und der Vorformteil des aerodynamischen Profils (211) miteinander durch die dreidimensionale Verwebung auf eine Weise verbunden sind, dass der Fußvorformteil (212) eine Entbindung umfasst, welche den Fußvorformteil in zwei gewebte Häute (2121, 2122) teilt, die um ein Einsatzelement (130) herum aufgewickelt sind.

6. Schaufel oder Propellerblatt nach Anspruch 5, wobei jede Haut (2121, 2122) einen ersten Teil (2121a, 2122a), der sich der Längsrichtung (D_{L}) folgend von dem Vorformteil des aerodynamischen Profils (211) weg erstreckt, und einen zweiten Teil (2121b, 2122b) umfasst, der sich der Längsrichtung folgend von dem ersten Teil (2121a, 2122a) weg erstreckt, wobei der zweite Teil jeder Haut um zumindest die Hälfte des Umfangs des Teils des Einsatzelements (130) herum aufgewickelt ist, um welchen der zweite Teil jedes gewebten Abschnitts aufgewickelt ist.

7. Schaufel oder Propellerblatt nach Anspruch 5 oder 6, wobei das Einsatzelement (130) aus einem Fasermaterial besteht, das aus den folgenden Fasermaterialien ausgewählt ist: dreidimensionale Gewebe, unidirektionale Schichten und Fasermatten, oder aus einem metallischen Material besteht.

8. Luftfahrzeugmotor, umfassend mehrere Schaufeln oder Propellerblätter (10) nach einem der Ansprüche 5 bis 7.

9. Luftfahrzeug umfassend zumindest einen Motor nach Anspruch 8.

## Claims

1. A method for manufacturing a turboprop engine blade or propeller airfoil (10) made of composite material comprising a fiber reinforcement densified by a matrix, the method comprising:
- the production by three-dimensional weaving of a fiber blank (100) made as a single piece, the fiber blank having a flat shape extending along a longitudinal direction (D_{L}) and a transverse direction (D_{T}) respectively corresponding to the span direction and to the chord direction of the blade or propeller airfoil to be manufactured, the fiber blank comprising a root part (112) and an aerodynamic profile part (111) extending along the longitudinal direction (D_{L}) from its root part and along the transverse direction (D_{T}) between a leading edge portion (100a) and a trailing edge portion (100b),
- the shaping of the fiber blank (100) to obtain a fiber preform (200) as a single piece having said aerodynamic profile part forming an aerodynamic profile preform (211) and said root part forming a root preform (212), and
- the densification of the preform (200) by a matrix to obtain a blade or propeller airfoil (10) made of composite material having a fiber reinforcement consisting of the fiber preform and densified by the matrix, and forming a single piece with an integrated root (12),
so that the root part (112) of the fiber blank (100) comprises a non-interlinking (106) extending along a plane parallel to the surface of the fiber blank over the whole root part, said non-interlinking separating the root part into two woven portions (113, 114), **characterized in that** the shaping of the fiber blank comprises the winding of each woven portion around an insertion element (130) in such a way as to form a root preform part (212).

2. The method as claimed in claim 1, wherein each woven portion (113, 114) comprises a first part (113a, 114a) extending along the longitudinal direction (D_{L}) from the aerodynamic profile part (111) and a second part (113b, 114b) extending along the longitudinal direction from the first part (113a, 113b), the second part (113b, 114b) having, along the transverse direction (D_{T}), a width (I_{113b}, I_{114b}) greater than the width (I₁₁₃ₐ, I₁₁₄ₐ) of the first part (113a, 114a).

3. The method as claimed in claim 2, wherein the second part (113b, 114b) of each woven portion (113, 114) has, along the transverse direction (D_{T}), a width (I_{113b}, I_{114b}) equivalent to at least half of the circumference of the part of the insertion element (130) around which said second part of each woven portion is wound.

4. The method as claimed in any of claims 1 to 3, wherein the insertion element (130) is composed of a fiber material chosen from among one of the following fiber materials: three-dimensional weaves, unidirectional laminates and fiber mat, or is composed of a metallic material.

5. A turboprop engine blade or propeller airfoil (10) made of composite material comprising a fiber reinforcement densified by a matrix, the blade or propeller airfoil including, along a longitudinal direction (D_{L}), a root (12) and an aerodynamic profile (11), the fiber reinforcement comprising a fiber preform (200) having a three-dimensional weave with a root preform part (212) located in the root (12) and an aerodynamic profile part (211) located in the aerodynamic profile (11), the root (212) and aerodynamic profile preform (211) parts being connected to one another by three-dimensional weaving, so that the root preform part (212) comprises a non-interlinking separating said root preform part into two woven skins (2121, 2122) wound around an insertion element (130).

6. The blade or propeller airfoil as claimed in claim 5, wherein each skin (2121, 2122) comprises a first part (2121a, 2122a) extending along the longitudinal direction (D_{L}) from the aerodynamic profile preform part (211) and a second part (2121b, 2122b) extending along the longitudinal direction from the first part (2121a, 2122a), the second part of each skin being wound around at least half of the circumference of the part of the insertion element (130) around which said second part of each woven portion is wound.

7. The blade or propeller airfoil as claimed in claim 5 or 6, wherein the insertion element (130) is composed of a fiber material chosen from among the following fiber materials: three-dimensional weaves, unidirectional laminates and fiber mats, or is composed of a metallic material.

8. An aeronautical engine comprising a plurality of blades or propeller airfoils (10) as claimed in any of claims 5 to 7.

9. An aircraft comprising at least one engine as claimed in claim 8.
